# EUROPEAN PATENT APPLICATION

(11) **EP 4 700 970 A1**
(43) Date of publication of application: **25.02.2026**
(21) Application number: 24894512.3
(22) Date of filing: 14.11.2024
(51) Int. Cl.: H01M 50/533, H01M 50/502, B21D 22/02, B21D 5/00

(54) **METHOD FOR BENDING LEAD OF BATTERY**

(30) Priority: 24.11.2023 KR 20230166001
(71) Applicant: LG Energy Solution, Ltd., Seoul 07335 (KR)
(72) Inventor: HYUN, Seongwon, Daejeon 34122 (KR); SEUNG, Kyung Bae, Daejeon 34122 (KR)
(74) Representative: Plasseraud IP
(86) International application number: PCT/KR2024/017973
(87) International publication number: WO 2025/110619

(57) **Abstract**

A method for bending a lead, according to the present invention, is a method for bending a first lead protruding from a battery cell stack positioned on one side of a first direction of a bus bar frame assembly including a bus bar and a bus bar frame for accommodating the bus bar, to the other side of the first direction of the bus bar frame assembly. The method includes the steps of: positioning a bending tool on one side of the first lead in a second direction perpendicular to the first direction; tilting the first lead to the other side in the second direction by pressing the first lead by moving the bending tool to the other side in the second direction; adhering the first lead to the bus bar frame assembly by pressing the first lead by moving the bending tool to one side in the first direction; sliding the bending tool with respect to the first lead by moving the bending tool to the other side in the second direction; and moving the bending tool to the other side in the first direction.

## Description

### Technical Field

The present disclosure relates to a lead bending method for a battery.

### Background

Since being rechargeable and dischargeable, a secondary battery is widely used in a mobile device such as a digital camera, a mobile phone, and a laptop computer. Particularly, the secondary battery is spotlighted as an energy source for an electric vehicle, an energy storage system (ESS), or the like. Meanwhile, as large capacity and high power are required in the electric vehicle and the energy storage system, a medium-large battery device such as a battery module receiving multiple secondary batteries inside a housing or a battery pack including multiple battery modules is widely used.

Since it is desired that the medium-large battery device is produced in small size and light weight when possible, a small rectangular battery, a pouch-type battery, or the like that may be piled to a high integration degree and has a light weight compared to a capacity is mainly used as a battery cell (unit battery). Particularly, a pouch-type battery cell that uses an aluminum laminate sheet or the like as an exterior member is recently spotlighted because of benefits such as small weight, low production cost, and easy deformation.

Meanwhile, a lead of the battery cell is welded to a busbar in order to electrically connect battery cells that forms such a medium-large battery device. Before the lead of the battery cell is welded to the busbar, the lead of the battery cell is bent to be attached to the busbar.

However, when bending is performed in a general bending method, there is concern that deformation of a battery, a decrease in bending quality, or the like may occur.

### Summary Technical Goals

The present disclosure relates to a method of bending a lead of a battery and is particularly to provide a lead bending method for a battery for minimizing deformation of the battery according to a bending process.

### Technical solutions

According to an aspect, there is provided a lead bending method of bending a first lead that protrudes from a battery cell stack, which is positioned at one side, in a first direction, of a busbar frame assembly including a busbar and a busbar frame configured to receive the busbar, toward the other side of the busbar frame assembly in the first direction,
the lead bending method including positioning a bending tool at one side of the first lead in a second direction perpendicular to a first direction, tilting the first lead toward the other side in the second direction by pressing the first lead by moving the bending tool toward the other side in the second direction, attach the first lead to the busbar frame assembly by pressing the first lead by moving the bending tool toward one side in the first direction, sliding the bending tool on the first lead by moving the bending tool toward the other side in the second direction, and moving the bending tool toward the other side in the first direction.

In the positioning of the bending tool at the one side of the first lead in the second direction, a distance in the first direction between the bending tool and the busbar frame assembly may be a half of a length of the first lead that protrudes toward the other side in the first direction from the busbar frame assembly.

In the tilting of the first lead toward the other side in the second direction by pressing the first lead by moving the bending tool toward the other side in the second direction, the bending tool may be moved up to a position at which a front end surface of the bending tool and a bending start point of the first lead at least partially overlap.

In the tilting of the first lead toward the other side in the second direction by pressing the first lead by moving the bending tool to the other side in the second direction, the bending tool may be moved up to a position at which a center of a front end surface of the bending tool in the second direction overlaps a bending start point of the first lead.

In the attaching of the first lead to the busbar frame assembly by pressing the first lead by moving the bending tool toward the one side in the first direction, the bending tool may press the busbar frame assembly so that the busbar frame assembly is elastically deformed toward the one side in the first direction.

In the moving of the bending tool toward the other side in the first direction, the busbar frame assembly may be at least partially elastically restored as the bending tool is moved backward toward the other side in the first direction.

The lead bending method may further include, after the moving of the bending tool toward the other side in the first direction,
bending a second lead protruding at the other side of the first lead in the second direction toward the other side of the busbar frame assembly in the first direction.

The bending of the second lead protruding at the other side of the first lead in the second direction toward the other side of the busbar frame assembly in the first direction may include positioning the bending tool at the other side of the second lead in the second direction, tilting the second lead toward one side in the second direction by pressing the second lead by moving the bending tool toward the one side in the second direction, attaching the second lead to the busbar frame assembly by pressing the second lead by moving the bending tool toward the one side in the first direction, and sliding the bending tool on the first lead by further moving the bending tool toward the one side in the second direction.

In the positioning of the bending tool at the other side of the second lead in the second direction, a distance in the first direction between the bending tool and the busbar frame assembly may be larger than a distance in the first direction between an end of the first lead and the busbar frame assembly, which occurs due to elastic restoration of the first lead.

A length of the first lead that protrudes from the busbar frame assembly may be smaller than a distance between the first lead and the second lead.

The length of the first lead that protrudes from the busbar frame assembly may be smaller than a value obtained by subtracting a half of a width of the bending tool in the second direction from the distance between the first lead and the second lead.

The bending tool may be insulated.

### Effects

According to an example aspect, it is possible to reduce a force required for a bending tool to tilt a first lead and possible to have stability in an operation of tilting as well. The force required for tilting the first lead may be proportional to a value obtained by dividing a minimum stress required for bending the first lead by a distance to the bending tool from a point at which the first lead 201 is bent. Thus, since the bending tool becomes closer to the point at which the first lead is bent as the bending tool becomes closer to a busbar frame assembly, the force required for tilting the first lead may be large, and accordingly, the busbar frame assembly may be pushed due to a repulsive force of the first lead in a process of tilting the first lead 201. However, as the bending tool becomes far from the busbar frame assembly, a danger that the first lead is not bound to and released from the bending tool may be increased in the process of tilting the first lead. Thus, the above-described operation can reduce the force required for the bending tool to tilt the first lead and have the stability as well.

According to another example aspect, in an operation of attaching the first lead to the busbar frame assembly by pressing the first lead, since the point at which first lead is bent is pressed by a front end surface of the bending tool, it is possible to easily bend the first lead. Particularly, when a center of the front end surface of the bending tool in a second direction presses the point at which the first lead is bent, the first lead may be bent most easily. Thus, the first lead being unattached from the busbar frame assembly due to a restoring force of the first lead may be minimized.

According to still another example aspect, it is possible to prevent the first lead from being spaced apart due to elastic restoration of the busbar frame assembly.

According to still another example aspect, the first lead and a second lead may be bent in a direction in which each becomes closer to another, and particularly, the first lead and the second lead may be provided to have at least one overlapping area as a result. This may contribute to prevention of deformation of a battery cell.

According to still another example aspect, in an operation of tilting the second lead toward one side in the second direction by pressing the second lead, the first lead which is elastically restored may be pressed by the second lead to be attached back to the busbar frame assembly.

### Brief Description of Drawings

FIG. 1 illustrates a battery cell stack including a lead to be bended by a lead bending method according to the present disclosure.
FIG. 2 is a diagram illustrating a battery cell stack including a lead bended by a lead bending method according to the present disclosure and a busbar frame assembly.
FIG. 3 is a diagram illustrating a bending tool and a lead used in a lead bending method according to the present disclosure.
FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, and FIG. 18 are diagrams illustrating an operation included a lead bending method according to the present disclosure.

### Detailed Description

Before the present disclosure is described, terms or words used in the present disclosure and the accompanying claims are not to be limited to general definitions or dictionary definitions. The terms and words are to be construed under a principle that an inventor may appropriately define a concept of a term in order to describe their disclosure in the best way. Thus, since example aspects described in the present disclosure and configurations illustrated in the accompanying drawings are merely most desirable example aspects and do not represent all of the technical spirit of the present disclosure, it should be understood that various equivalents and modifications that may replace the example aspects and configurations may be present at the time of filing the application of the present disclosure.

The same reference numerals or symbols illustrated in the accompanying drawings represent components or elements performing substantially identical functions. For convenience for description and understanding, example aspects different from each other may be described with the same reference numerals or symbols. In other words, although a plurality of drawings illustrates elements having the same reference numeral, the plurality of drawings does not mean only one example aspect.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example aspects of the present disclosure will be described with reference to the accompanying drawings. However, the idea of the present disclosure is not limited to the proposed example aspects. For example, those skilled in the art who understand the idea of the present disclosure may propose another example aspect included in the scope of the idea of the present disclosure through addition, change, removal, or the like of an element. However, the other example aspect is also included in the scope of the idea of the present disclosure. Shapes, sizes, or the like of elements in the drawings may be exaggerated for clearer description.

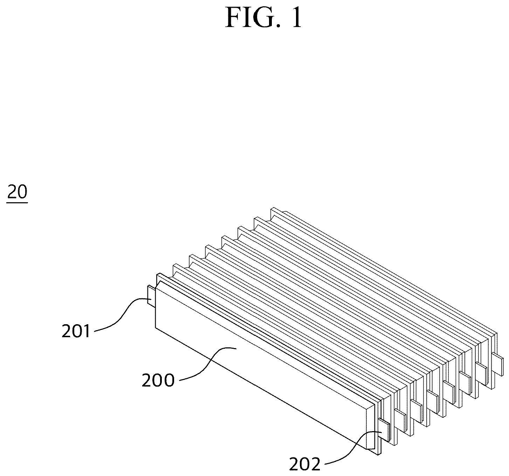

FIG. 1 illustrates a battery cell stack 20 including leads 201 and 202 to be bended by a lead bending method according to the present disclosure.

Referring to FIG. 1, the battery cell stack 20 may include a plurality of battery cells 200. The plurality of battery cells 200 may be stacked in the battery cell stack 20 in one direction. A battery cell 200 may be a pouch cell.

A pouch battery cell may include an electrode assembly, an electrolyte, and a pouch exterior material. A stack including a first electrode, a second electrode, and a separator may be folded or winded, so that the electrode assembly may be formed. The pouch battery cell may include a first lead 201 electrically connected to the first electrode of the electrode assembly to protrude toward an outside of the pouch exterior material and a second lead 202 electrically connected to the second electrode of the electrode assembly to protrude toward the outside of the pouch exterior material. The first lead 201 and the second lead 202 may protrude in both directions as illustrated in FIG. 1, but may protrude in one direction. A material of the first lead 201 may be copper. The first edge 201 may be a negative electrode. A material of the second lead 202 may be aluminum. The second lead 202 may be a positive electrode.

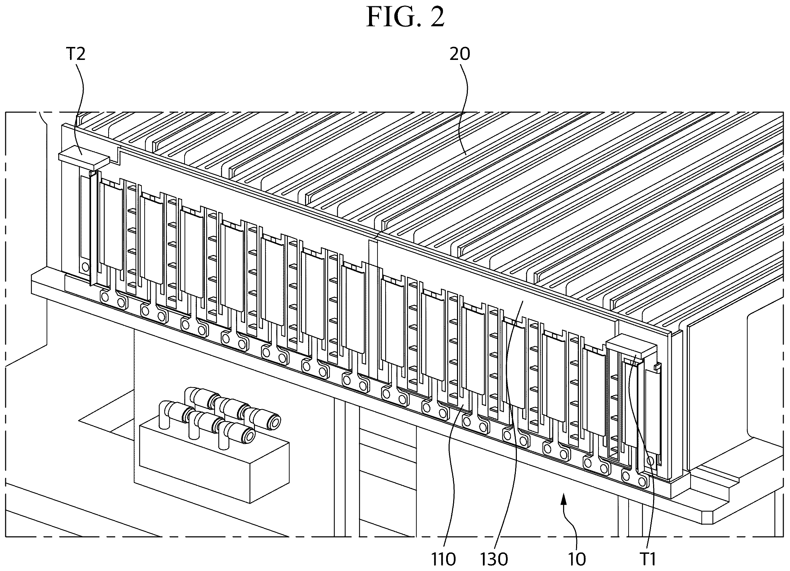

FIG. 2 is a diagram illustrating the battery cell stack 20 including a lead bended by a lead bending method according to the present disclosure and a busbar frame assembly 10.

Referring to FIG. 2, the busbar frame assembly 10 may include a busbar 110 and a busbar frame 130.

The plurality of battery cells 200 which forms the battery cell stack 20 may be electrically connected by the busbar 110. The plurality of battery cells 200 which forms the battery cell stack 20 may be connected in series and/or in parallel depending on a connection scheme of the busbar 110. The busbar 110 may be provided in each gap between the plurality of battery cells 200. The busbar 110 may be in contact with a lead of the battery cell 200. The busbar 110 and the lead of the battery cell 200 may be coupled to each other by welding. The busbar 110 may include a conductive material.

The busbar frame 130 may receive the busbar 110. The busbar frame 130 may be provided to a one side and/or the other side of the battery cell stack 20. The busbar frame 130 may be provided in a direction in which the lead of the battery cell 200 protrudes. The busbar frame 130 may include an electrically insulating material. The busbar frame 130 may receive a first external terminal T1 and a second external terminal T2.

As illustrated in FIG. 2, the lead and the busbar 110 are required to be welded so that the battery cell stack 20 and the busbar 110 are stably coupled. In order to weld the lead and the busbar 110, the lead may be bent at an angle of approximately 90 degrees so the lead is in areal contact with the busbar 110 or the busbar frame 130.

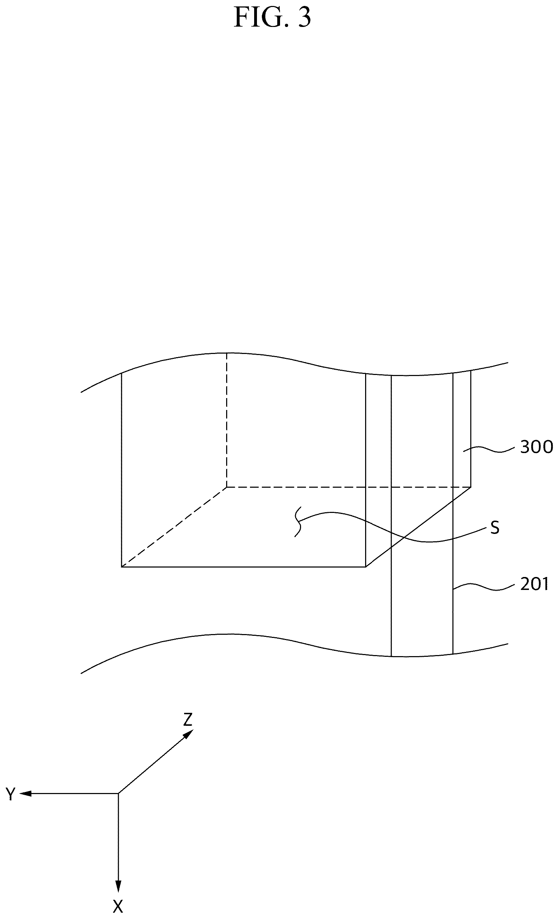

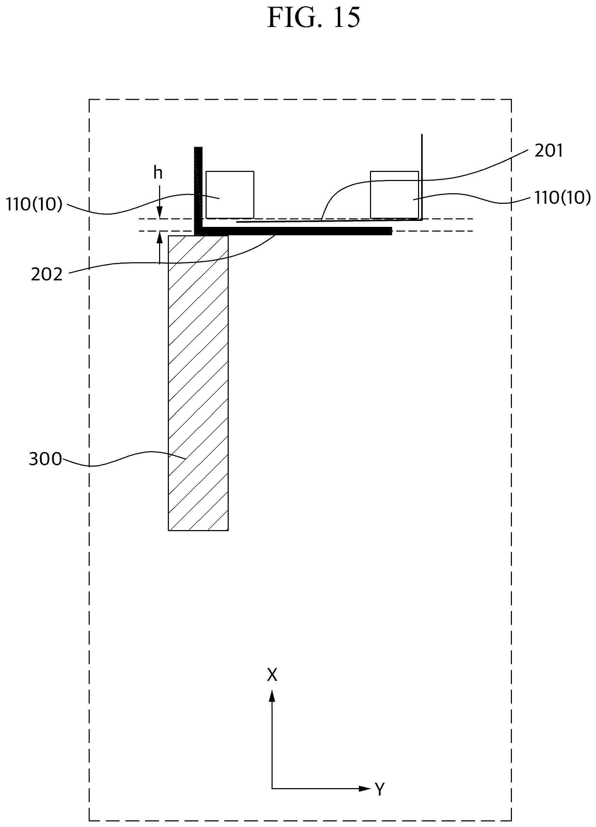

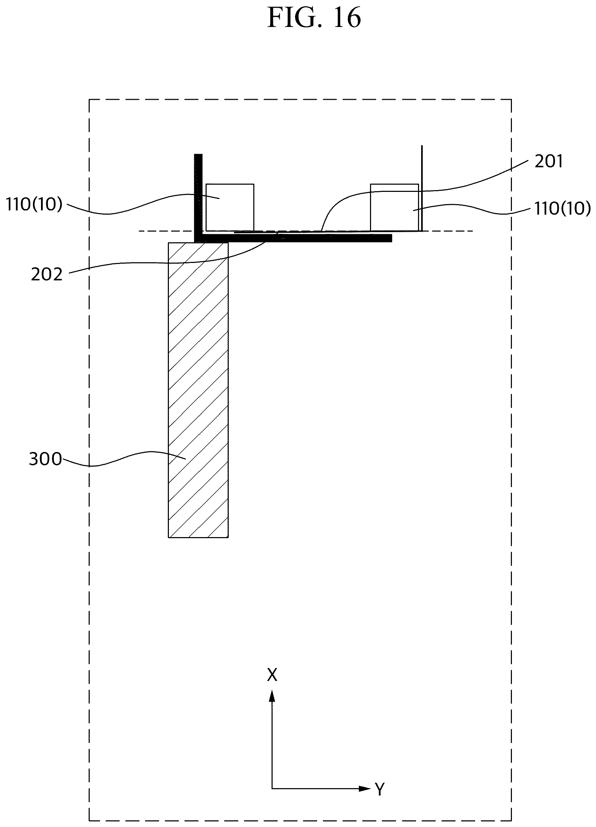

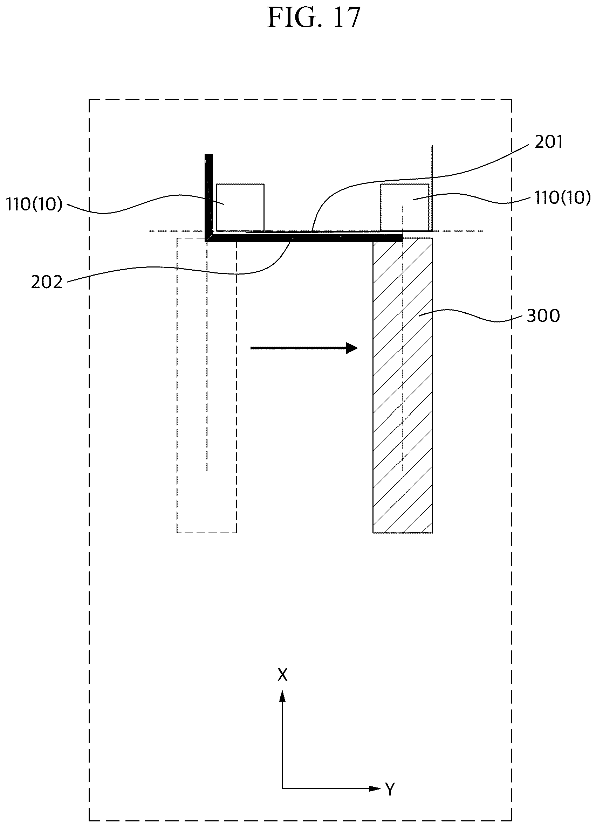

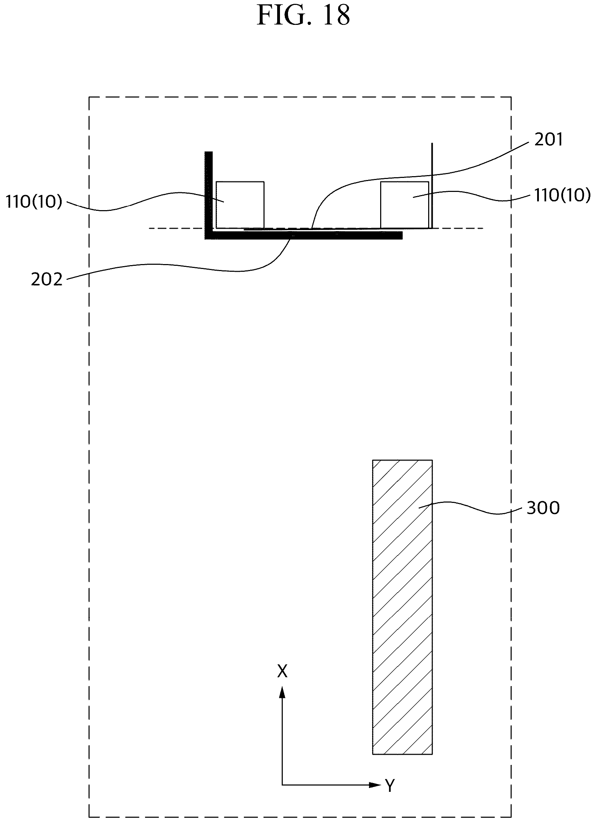

Hereinafter, the lead bending method will be described in further detail with reference to FIG. 3, FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, and FIG. 18 .

FIG. 3 is a diagram illustrating a bending tool 300 and the first lead 201 used in a lead bending method according to the present disclosure.

A method of bending the first lead 201 by using the bending tool 300 will be schematically described with reference to FIG. 3.

FIG. 3 is a shape in which the bending to 300 is positioned on one side of the first lead 201. The bending tool 300 may bend the first 201 by moving toward the other side of the first lead 201. The bending tool 300 may attach the first lead 201 to the busbar 110 by pressing the first lead 201 with a front end surface S of the bending tool 300 after bending the first lead 201.

The bending tool 300 may be insulated. The bending tool 300 may be insulated to prevent a danger of a short circuit between products. For example, the bending tool 300 may have a material such as ceramic or polyether ether ketone (PEEK).

The bending tool 300 may be provided to be larger than a width of a lead in order to apply equal pressure throughout an entire width-wise area of the lead. A length of the front end surface S of the bending tool 300 in a direction of a Z-axis may be larger than the width of the lead.

A width of the front end surface S of the bending tool 300 in a direction parallel to a Y-axis may be greater than or equal to 5 millimeters (mm). When a length of the front end surface S of the bending tool 300 in a direction of the Y-axis is less than or equal to 5 mm, setting a position at which the front end surface S of the bending tool 300 and a bending start point of the lead 201 at least partially overlap on the Y-axis may be difficult, and damage to the lead 201 or the busbar frame assembly 10 may be caused because a point of pressing by the bending tool 300 becomes small.

An edge of the bending tool 300 may be rounded off. Through this, damage to the lead due to the edge of the bending tool 300 may be prevented in a process in which the bending tool 300 is in contact with the lead.

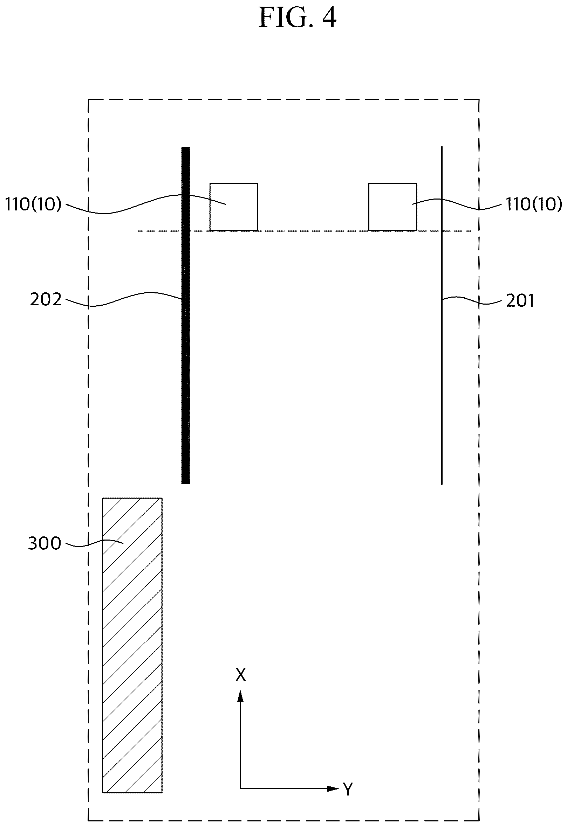

FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, and FIG. 18 are diagrams illustrating an operation included a lead bending method according to the present disclosure. The busbar frame 130, which receives the busbar 110, and the battery cell stack 20 are omitted in FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, and FIG. 18 for easier description. The first lead 201 and the second lead 202 in FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, and FIG. 18 may be leads of adjacent battery cells 200. The busbar 110 illustrated at a point in each of a positive direction and a negative direction of a Y-axis may be a cross section of one busbar 110 and may be a cross section of one busbar 110 in a shape of which a central portion is approximately hollow. Thus, the adjacent battery cells 200 may be electrically connected by the busbar 110. The lead bending method illustrated in FIG. 4, FIG. 5, FIG. 6, FIG. 7, FIG. 8, FIG. 9, FIG. 10, FIG. 11, FIG. 12, FIG. 13, FIG. 14, FIG. 15, FIG. 16, FIG. 17, and FIG. 18 may be performed in one direction and/or both directions in which a lead of the battery cell stack 20 protrudes.

The lead bending method according to the present disclosure may be a method of bending the first lead 201 that protrudes from the battery cell stack 20, which is provided at one side of the busbar frame assembly 10 in a first direction (that is, at one side in a positive direction of an X-axis), toward the other side of the busbar frame assembly 10 in the first direction (that is, at the other side in a negative direction of the X-axis). The plurality of battery cells 200 may be stacked in a second direction perpendicular to the first direction (that is, in a direction parallel to the Y-axis) in the battery cell stack 20.

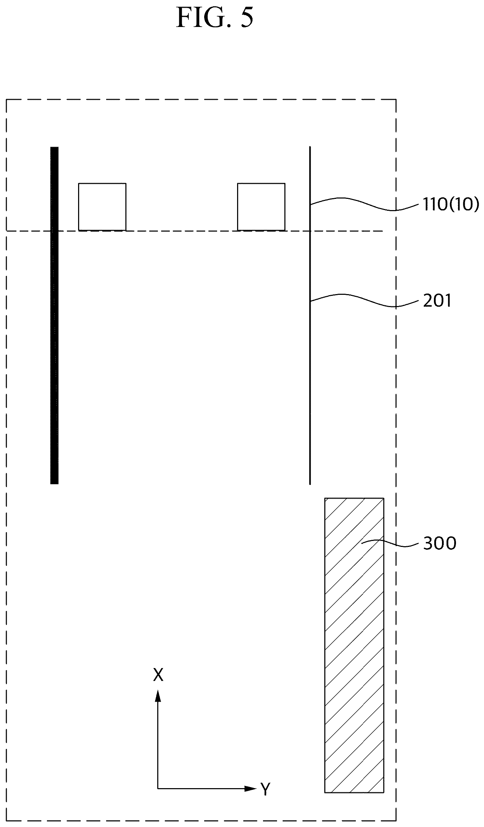

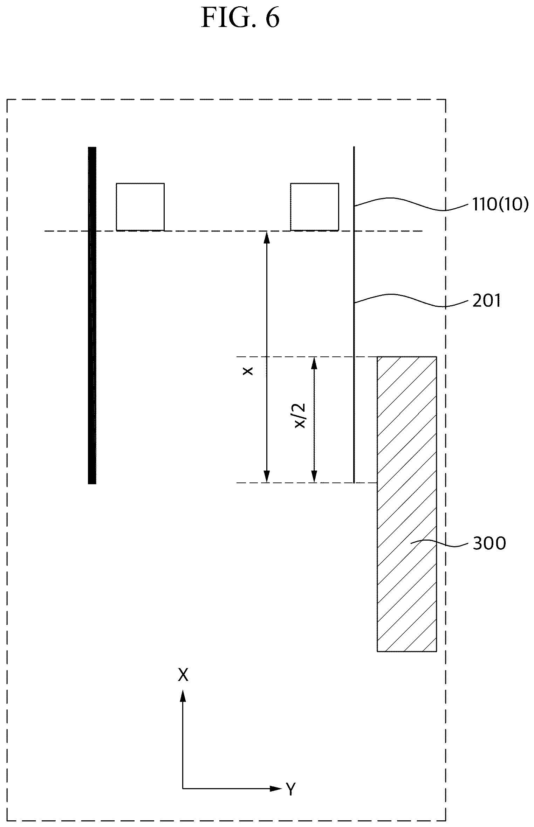

The lead bending method may include positioning the bending tool 300 at one side of the first lead 201 in the second direction (that is, at one side in the positive direction of the Y-axis) perpendicular to the first direction (e.g., a direction parallel to the X-axis). FIG. 4 is a shape in which the bending tool 300 is positioned at the other side of the first lead 201 in the second direction (that is, at the other side in the negative direction of the Y-axis), and FIG. 5 and FIG. 6 are shapes in which the bending tool 300 is positioned at the one side of the first lead 201 in the second direction (that is, at the one side in the positive direction of the Y-axis).

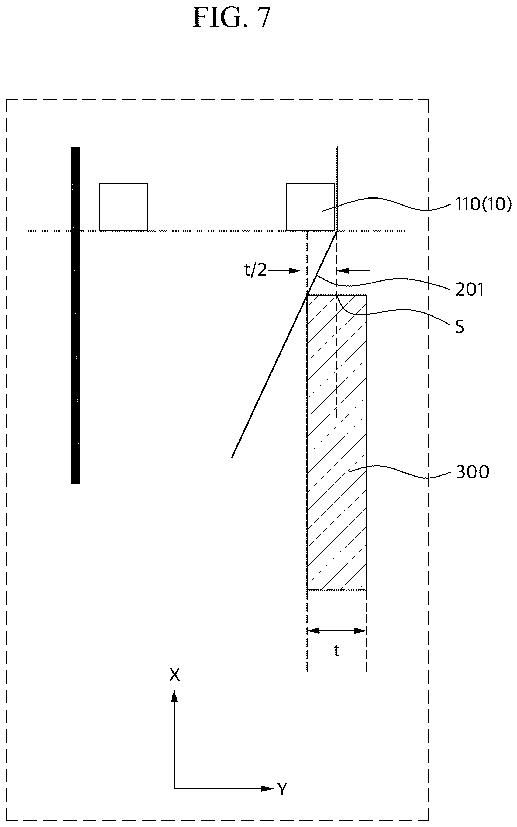

The lead bending method may include tilting the first lead 201 toward the other side in the second direction (that is, in the negative direction of the Y-axis) by pressing the first lead 201 by moving the bending tool 300 toward the other side in the second direction (that is, in the negative direction of the Y-axis). FIG. 7 is a shape in which the bending tool 300 presses the first lead 201 to tilt the first lead 201 toward the other side in the second direction (that is, in the negative direction of the Y-axis).

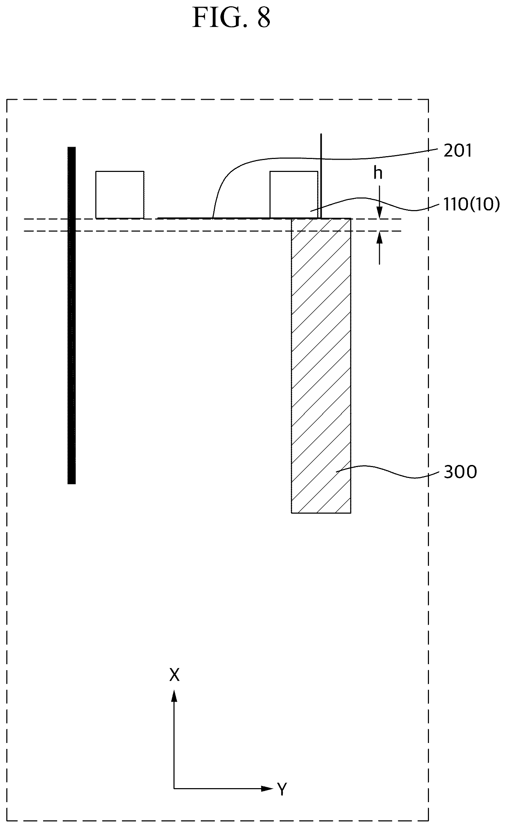

The lead bending method may include attaching the first lead 201 to the busbar frame assembly 10 by pressing the first lead 201 by moving the bending tool 300 toward one side in the first direction (that is, in the positive direction of the X-axis). FIG. 8 is a shape in which the bending tool 300 is moved toward the one side in the first direction (that is, in the positive direction of the X-axis) to press the first lead 201 and attach the first lead 201 to the busbar frame assembly 10.

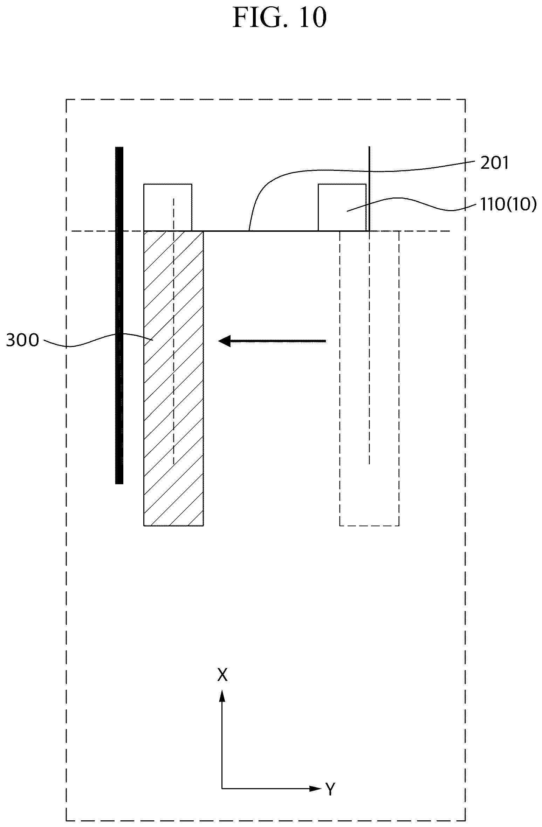

The lead bending method may include sliding the bending tool 300 on the first lead 201 by moving the bending tool 300 toward the other side in the second direction (that is, in the negative direction of the Y-axis). FIG. 10 is a shape in which the bending tool 300 is moved toward the other side in the second direction (that is, in the negative direction of the Y-axis) to be slid on the first lead 201.

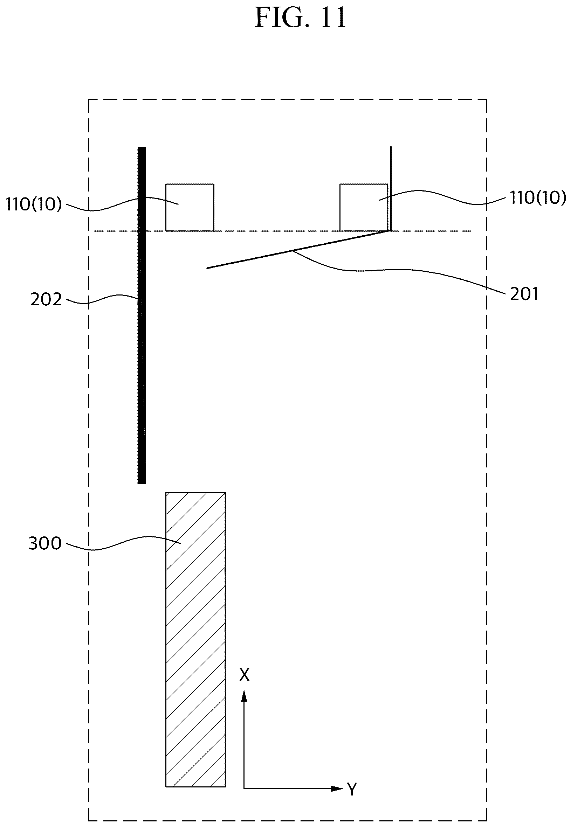

The lead bending method may include moving the bending tool 300 toward the other side in the first direction (that is, in the negative direction of the X-axis). FIG. 11 is a shape in which the bending tool 300 is moved toward the other side in the first direction (that is, in the negative direction of the X-axis).

Referring back to FIG. 6, in the positioning of the bending tool 300 at the one side of the first lead 201 in the second direction (that is, at the one side in the positive direction of the Y-axis), a distance X/2 in the first direction between the bending tool 300 and the busbar frame assembly 10 may correspond to approximately a half of a length X of the first lead 201 that protrudes toward the other side in the first direction from the frame assembly 10 (that is, in the negative direction of the X-axis).

According to such an operation of the present disclosure, in the tilting of the first lead 201 toward the other side in the second direction (that is, in the negative direction of the Y-axis), the bending tool 300 may reduce a force required for tilting the first lead 210 as well as bringing stability to the tilting. The force required for tilting the first lead 201 may be proportional to a value obtained by dividing a minimum stress required for bending the first lead 201 by a distance to the bending tool 300 from a point at which the first lead 201 is bent. Thus, since the bending tool 300 becomes closer to the point at which the first lead 201 is bent as the bending tool 300 becomes closer to the busbar frame assembly 10, the force required for tilting the first lead 201 may be large, and accordingly, the busbar frame assembly 10 may be pushed due to a repulsive force of the first lead 201 in a process of tilting the first lead 201. In contrast, as the bending tool 300 becomes far from the busbar frame assembly 10, a danger that the first lead 201 is not bound to and released from the bending tool 300 may be increased in the process of tilting the first lead 201. Thus, in the above-described operation, setting a distance in the first direction between the bending tool 300 and the busbar frame assembly 10 may bring stability of an operation while reducing the force required for tilting the first lead 201.

Referring back to FIG. 7, in the tilting of the first lead 201 toward the other side in the second direction (that is, in the negative direction of the Y-axis) by pressing the first lead 201 by moving the bending tool 300 toward the other side in the second direction (that is, in the negative direction of the Y-axis), the bending tool 300 may be moved up to a position at which the front end surface S of the bending tool and a bending start point of the first lead 201 at least partially overlap. In other words, the bending tool 300 may be moved until the front end surface S of the bending tool 300 and the bending start point of the first lead 201 at least partially overlap in the first direction. Here, "overlap in the first direction" may mean that two elements are disposed at a position at which the two elements overlap each other when viewed in the first direction.

In the tilting of the first lead 201 toward the other side in the second direction (that is, in the negative direction of the Y-axis) by pressing the first lead 201 by moving the bending tool 300 toward the other side in the second direction (that is, in the negative direction of the Y-axis), a center of the front end surface S of the bending tool 300 in the second direction (e.g., the direction parallel to the Y-axis) may be moved a position overlapping the bending start point of the first lead 201.

The bending start point of the first lead 201 may be a start point at which the first lead 201 protrudes from the busbar frame assembly 10.

According to such an operation of the present disclosure, in the attaching of the first lead 201 to the busbar frame assembly 10 by pressing the first lead 201, since the point at which first lead 201 is bent is pressed by the front end surface S of the bending tool 300, the first lead 201 may be easily bent. Particularly, when the center of the front end surface S of the bending tool 300 in the second direction presses the point at which the first lead 201 is bent, the first lead 201 may be bent most easily. Thus, the first lead 201 being unattached from the busbar frame assembly 10 due to a restoring force of the first lead 201 may be minimized.

Referring back to FIG. 8, in the attaching of the first lead 201 to the busbar frame assembly 201 by pressing the first lead 201 by moving the bending tool 300 toward the one side in the first direction (that is, in the positive direction of the X-axis), the bending tool 300 may press the busbar frame assembly 10 so that the busbar frame assembly 10 is elastically deformed toward the one side in the first direction (that is, in the positive direction of the X-axis). A movement amount h of the elastically deformed busbar frame assembly 10 may be less than or equal to a thickness of the first lead 201. For example, the busbar frame assembly 10 may be elastically deformed by approximately 0.5 mm to 1 mm by pressing by the bending tool 300.

In this operation, the first lead 201 is required to be securely bent so as not to be spaced from the busbar frame assembly 10. When the bending tool 300 is moved overly fast, since the first lead 201 may not be properly shaped and may be elastically restored, a speed of the bending tool 300 for minimizing restoration of the first lead 201 may be applied. An operation for acquiring the speed may be added prior to a bending process.

In addition, when the bending process is performed simultaneously in both directions in which leads of the battery cell stack 20 protrude, speeds of bending tools may be matched, so that the battery cell 200 may be prevented from being pushed or twisted in one direction.

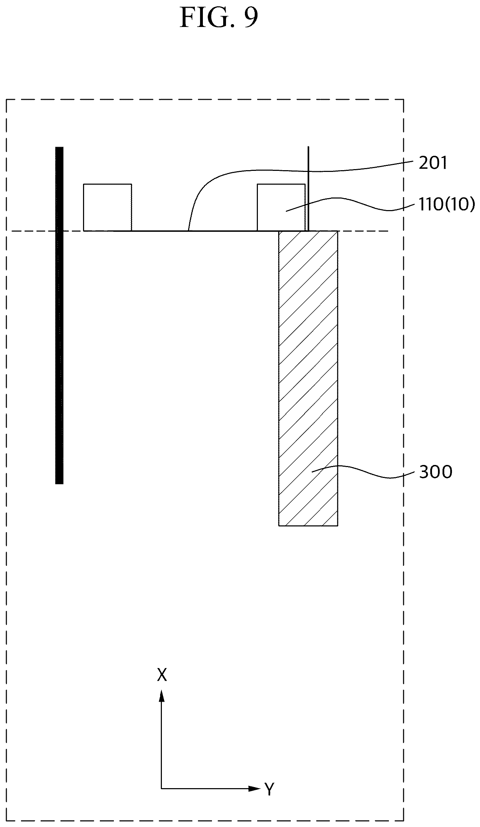

Referring to back to FIG. 9, the moving of the bending tool 300 toward the other side in the first direction (that is, in the negative direction of the X-axis) may further include an operation in which the bending tool 300 is moved backward toward the other side in the first direction (that is, in the negative direction of the X-axis) so that the busbar frame assembly 10 is at least partially elastically restored. For example, the bending tool 300 may move backward for the thickness of the first lead 201 toward the other side in the first direction (that is, in the negative direction of the X-axis). Alternatively, the bending tool 300 may move backward for a half of the thickness of the first lead 201 toward the other side in the first direction (that is, in the negative direction of the X-axis).

Since such a process in which the bending tool 300 moves backward is present, deformation of the first lead 201 due to the following movement of the bending tool 300 in the second direction may be minimized. That is, when the bending tool 300 moves toward the other side in the second direction (that is, in the negative direction of the Y-axis) in a state of excessively pressing the first lead 201, an area of the first lead 201, which is pressed by and released from the bending tool 300, may not be attached to the busbar frame assembly 10 and may become open, or bending may be canceled. Thus, due to such an operation in which the bending tool 300 moves backward, the bending tool 300 may be slid in a state of being in proper contact with the first lead 201.

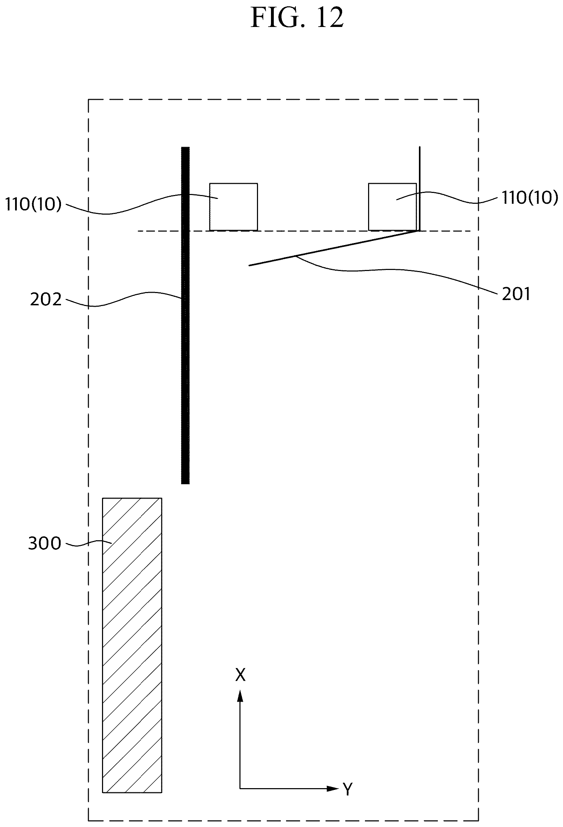

Referring back to FIG. 12, FIG. 13, FIG. 14, FIG. 15, FIG. 16, FIG. 17, and FIG. 18, the lead bending method may further include bending the second lead 202 protruding at the other side of the first lead 201 in the second direction (that is, at the other side in the negative direction of the Y-axis) toward the other side of the busbar frame assembly 10 in the first direction (that is, in the negative direction of the X-axis).

In the present disclosure, the first lead 201 and the second lead 202 may be bent in a direction in which each becomes closer to another, and particularly, the first lead 201 and the second lead 202 may be provided to have at least one overlapping area as a result. This may contribute to prevention of deformation of the battery cell 200.

In the lead bending method, the bending of the second lead 202 protruding at the other side of the first lead 201 in the second direction (that is, at the other side in the negative direction of the X-axis) toward the other side of the busbar frame assembly 10 in the first direction (that is, in the negative direction of the X-axis) may include positioning the bending tool 300 at the other side of the second lead 202 in the second direction (that is, at the other side in the negative direction of the Y axis), tilting the second lead 202 toward one side in the second direction (that is, in the positive direction of the Y-axis) by pressing the second lead 202 by moving the bending tool 300 toward the one side in the second direction (that is, in the positive direction of the Y-axis), attaching the second lead 202 to the busbar frame assembly 10 by pressing the second lead 202 by moving the bending tool 300 toward the one side in the first direction (that is, in the positive direction of the X-axis), and sliding the bending tool 300 on the first lead 201 by further moving the bending tool toward the one side in the second direction (that is, in the positive direction of the Y-axis). Such operations may be performed in a way similar to the above-described method of bending the first lead 201.

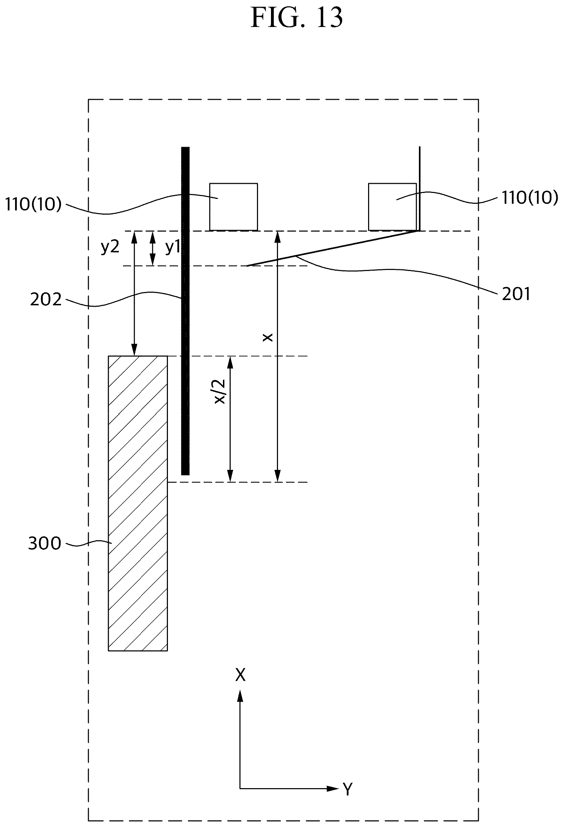

After the bending of the first lead 201 is ended, in order to bend the second lead 202, the bending tool 300 may move toward the other side in the second direction (that is, in the negative direction of the Y-axis) as illustrated in FIG. 12 and then move toward the one side in the first direction (that is, in the positive direction of the X-axis) as illustrated in FIG. 13.

Referring to FIG. 13, in the positioning of the bending tool 300 at the other side of the second lead 202 in the second direction (that is, at the other side in the negative direction of the Y-axis), a distance y2 in the first direction (e.g., the direction parallel to the X-axis) between the bending tool 300 and the busbar frame assembly 10 may be larger than a distance y1 in the first direction (e.g., the direction parallel to the X-axis) between an end of the first lead 201 and the busbar frame assembly 10, which occurs due to elastic restoration of the first lead 201.

According to such an operation of the present disclosure, in the tilting of the second lead 202 toward the one side in the second direction (that is, in the positive direction of the Y-axis) by pressing the second lead 202, the first lead 201 which is elastically restored may be pressed by the second lead 202 to be attached back to the busbar frame assembly 10. This is because the elastically restored first lead 201 may be damaged or spaced apart from the busbar frame assembly 10 by the second lead 202 when the second lead 202 is pressed by moving the bending tool 300 toward the one side in the second direction (that is, in the positive direction of the Y-axis) in a state in which the distance in the first direction between the bending tool 300 and the busbar frame assembly 10 is smaller than the distance in the first direction between the end of the first lead 201 and the busbar frame assembly 10, which occurs due to the elastic restoration of the first lead 201.

With reference back to FIG. 13, FIG. 14, FIG. 15, FIG. 16, FIG. 17, and FIG. 18, a method of bending the second lead 202 will be simply described by applying the above-described method of bending the first lead 201 thereto.

In the positioning of the bending tool 300 at the other side of the second lead 202 in the second direction (that is, at the other side in the negative direction of the Y-axis), a distance in the first direction between the bending tool 300 and the busbar frame assembly 10 may correspond to a half of a distance for which the second lead 202 protrudes toward the other side of the busbar frame assembly 10 in the first direction (that is, in the negative direction of the X-axis).

In the tilting of the second lead 202 toward the one side in the second direction (that is, in the positive direction of the Y-axis) by pressing the second lead 202 by moving the bending tool 300 toward the one side in the second direction (that is, in the positive direction of the Y-axis), the bending tool 300 may be moved up to a position at which the front end surface S of the bending tool 300 and a bending start point of the second lead 202 at least partially overlap. In other words, the bending tool 300 may be moved until the front end surface S of the bending tool 300 and the bending start point of the second lead 202 at least partially overlap on the Y-axis.

In the tilting of the second lead 202 toward the one side in the second direction (that is, in the positive direction of the Y-axis) by pressing the second lead 202 by moving the bending tool 300 toward the one side in the second direction (that is, in the positive direction of the Y-axis), the center of the front end surface S of the bending tool 300 in the second direction (e.g., the direction parallel to the Y-axis) may be moved up to a position overlapping the bending start point of the second lead 202.

The bending start point of the second lead 202 may be a start point at which the second lead 202 protrudes from the busbar frame assembly 10.

In the attaching of the second lead 202 to the busbar frame assembly 10 by pressing the second lead 202 by moving the bending tool 300 toward the one side in the first direction (that is, in the positive direction of the X-axis), as the bending tool 300 presses the busbar frame assembly 10, the busbar frame assembly 10 may be elastically deformed toward the one side in the first direction (that is, in the positive direction of the X-axis). For example, the busbar frame assembly 10 may be elastically deformed maximally by a sum of the thickness of the first lead 201 and a thickness of the second lead 202.

In the moving of the bending tool 300 toward the other side in the first direction (that is, in the negative direction of the X-axis), the bending tool 300 may be moved backward toward the other side in the first direction (that is, in the negative direction of the X-axis) so that the busbar frame assembly 10 is at least partially elastically restored. For example, the bending tool 300 may move backward for the sum of the thickness of the first lead 201 and the thickness of the second lead 202 toward the other side in the first direction (that is, in the negative direction of the X-axis). Alternatively, the bending tool 300 may move backward for a half of the sum of the thickness of the first lead 201 and the thickness of the second lead 202 toward the other side in the first direction (that is, in the negative direction of the X-axis).

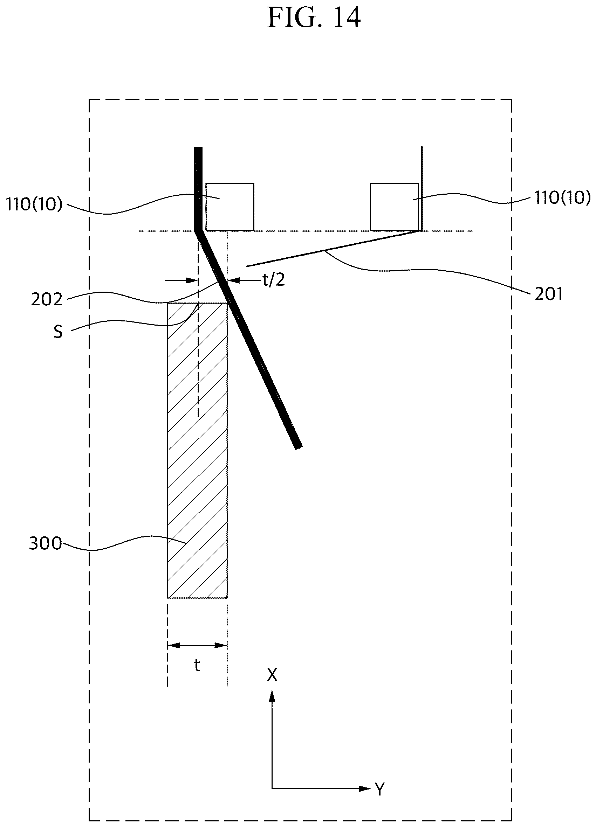

Referring to FIG. 14, a length of the first lead that protrudes from the busbar frame assembly 10 may be smaller than a distance between the first lead 201 and the second lead 202. Particularly, the length of the first lead 201 that protrudes from the busbar frame assembly 10 may be smaller than a value obtained by subtracting a half of a width t of the bending tool 300 in the second direction from the distance between the first lead 201 and the second lead 202.

According to such a configuration of the present disclosure, after the first lead 201 is bent earlier, in the bending of the second lead 202, damage to or crumpling up of an end portion of the first lead 201 due to the bending of the second lead 202 may be prevented.

Particularly, when the second lead 202 is bent in a state in which the first lead 201 is not completely attached to the busbar frame assembly 10, there is concern that the first lead 201 interrupts the bending of the second lead 202, and accordingly, prevention thereof is required. For example, when the length of the first lead 201 that protrudes from the busbar frame assembly 10 is larger than the value obtained by subtracting the half of the width t of the bending tool in the second direction from the distance between the first lead 201 and the second lead 202, as not being folded to some degree, the second lead 202 may interfere with the first lead 201, and accordingly, there is concern that the first lead 201 is damaged as greatly receiving a width-wise compressive force.

As described above, desired example aspects of the present disclosure are mainly described with reference the accompanying drawings, but it is apparent to those skilled in the art that various modifications are allowed without deviating from the category of the present disclosure. Thus, the category of the present disclosure should be construed based on the claims described to include examples of such modifications.

### [Description of Reference Numerals]

10 Busbar frame assembly
110 Busbar
130 Busbar frame
20 Battery cell stack
200 Battery cell
201 First lead
202 Second lead
300 Bending tool
S Front end surface
T1 First terminal
T2 Second terminal

## Claims

1. A lead bending method of bending a first lead that protrudes from a battery cell stack, which is positioned at one side, in a first direction, of a busbar frame assembly including a busbar and a busbar frame configured to receive the busbar, toward the other side of the busbar frame assembly in the first direction, the lead bending method comprising:
positioning a bending tool at one side of the first lead in a second direction perpendicular to a first direction;
tilting the first lead toward the other side in the second direction by pressing the first lead by moving the bending tool toward the other side in the second direction;
attach the first lead to the busbar frame assembly by pressing the first lead by moving the bending tool toward one side in the first direction;
sliding the bending tool on the first lead by moving the bending tool toward the other side in the second direction; and
moving the bending tool toward the other side in the first direction.

2. The lead bending method of claim 1, wherein, in the positioning of the bending tool at the one side of the first lead in the second direction, a distance in the first direction between the bending tool and the busbar frame assembly is a half of a length of the first lead that protrudes toward the other side in the first direction from the busbar frame assembly.

3. The lead bending method of claim 1, wherein, in the tilting of the first lead toward the other side in the second direction by pressing the first lead by moving the bending tool toward the other side in the second direction, the bending tool is moved up to a position at which a front end surface of the bending tool and a bending start point of the first lead at least partially overlap.

4. The lead bending method of claim 1, wherein, in the tilting of the first lead toward the other side in the second direction by pressing the first lead by moving the bending tool to the other side in the second direction, the bending tool is moved up to a position at which a center of a front end surface of the bending tool in the second direction overlaps a bending start point of the first lead.

5. The lead bending method of claim 1, wherein, in the attaching of the first lead to the busbar frame assembly by pressing the first lead by moving the bending tool toward the one side in the first direction, the bending tool presses the busbar frame assembly so that the busbar frame assembly is elastically deformed toward the one side in the first direction.

6. The lead bending method of claim 5, wherein, in the moving of the bending tool toward the other side in the first direction, the busbar frame assembly is at least partially elastically restored as the bending tool is moved backward toward the other side in the first direction.

7. The lead bending method of claim 1, further comprising, after the moving of the bending tool toward the other side in the first direction, bending a second lead protruding at the other side of the first lead in the second direction toward the other side of the busbar frame assembly in the first direction.

8. The lead bending method of claim 7, wherein the bending of the second lead protruding at the other side of the first lead in the second direction toward the other side of the busbar frame assembly in the first direction comprises:
positioning the bending tool at the other side of the second lead in the second direction;
tilting the second lead toward one side in the second direction by pressing the second lead by moving the bending tool toward the one side in the second direction;
attaching the second lead to the busbar frame assembly by pressing the second lead by moving the bending tool toward the one side in the first direction; and
sliding the bending tool on the first lead by further moving the bending tool toward the one side in the second direction.

9. The lead bending method of claim 8, wherein, in the positioning of the bending tool at the other side of the second lead in the second direction, a distance in the first direction between the bending tool and the busbar frame assembly is larger than a distance in the first direction between an end of the first lead and the busbar frame assembly, which occurs due to elastic restoration of the first lead.

10. The lead bending method of claim 7, wherein a length of the first lead that protrudes from the busbar frame assembly is smaller than a distance between the first lead and the second lead.

11. The lead bending method of claim 10, wherein a length of the first lead that protrudes from the busbar frame assembly is smaller than a value obtained by subtracting a half of a width of the bending tool in the second direction from the distance between the first lead and the second lead.

12. The lead bending method of claim 1, wherein the bending tool is insulated.
